**Europäisches Patentamt**

**European Patent Office**

**Office européen des brevets**

(19)

(11) Veröffentlichungsnummer : **0 466 716 B1**

(12)                 **EUROPÄISCHE PATENTSCHRIFT**

(45) Veröffentlichungstag der Patentschrift :
**19.11.92 Patentblatt 92/47**

(51) Int. Cl.⁵ : **F02D 41/34, F02D 41/22**

(21) Anmeldenummer : **90904745.8**

(22) Anmeldetag : **22.03.90**

(86) Internationale Anmeldenummer :
**PCT/DE90/00228**

(87) Internationale Veröffentlichungsnummer :
**WO 90/12206 18.10.90 Gazette 90/24**

(54) **VERFAHREN ZUM VERRINGERN DER KRAFTSTOFFZUFUHR FÜR EINEN MOTORZYLINDER.**

(30) Priorität : **08.04.89 DE 3911508**

(43) Veröffentlichungstag der Anmeldung :
**22.01.92 Patentblatt 92/04**

(45) Bekanntmachung des Hinweises auf die
Patenterteilung :
**19.11.92 Patentblatt 92/47**

(84) Benannte Vertragsstaaten :
**DE ES FR GB IT**

(56) Entgegenhaltungen :
**DE-A- 3 724 420**
**DE-A- 3 817 920**
**US-A- 4 485 791**
**US-A- 4 532 905**

(73) Patentinhaber : **ROBERT BOSCH GMBH**
**Postfach 30 02 20**
**W-7000 Stuttgart 30 (DE)**

(72) Erfinder : **LEMBKE, Manfred**
**Gartenstr. 79/1**
**W-7016 Gerlingen (DE)**
Erfinder : **KRATT, Alfred**
**Hermann-Essig-Str. 56**
**W-7141 Schwieberdingen (DE)**
Erfinder : **ABIDIN, Anwar**
**Einsteinstr. 27**
**W-7250 Leonberg (DE)**

**Beschreibung**

Technisches Gebiet

Die Erfindung betrifft ein Verfahren zum Verringern der Kraftstoffzufuhr für einen ausgewählten Zylinder einer mehrzylindrigen Brennkraftmaschine. Der ausgewählte Zylinder ist ein solcher, in dem ein Zustand eingetreten ist, der zuverlässige Verbrennung eines Luft/Kraftstoffgemisches verhindert. Es wird also z. B. ein Zylinder sein, in dem die Zündung ausgefallen ist (vergleiche DE-A- 3724 420).

Stand der Technik

Von Brennkraftmaschinen mit Einzeleinspritzung ist es bekannt, die Kraftstoffzufuhr zu einem Zylinder durch Abschalten des Einspritzventils zu unterbinden, sobald festgestellt wird, daß dieser Zylinder ausgefallen ist, also ein Zustand eingetreten ist, in dem zuverlässige Verbrennung nicht mehr möglich ist. Die restlichen Zylinder werden in unveränderter Weise weiterbetrieben, also so, als würden noch alle Zylinder zufriedenstellend arbeiten.

Bei Brennkraftmaschinen mit Einzeleinspritzung ist es offensichtlicherweise sehr einfach möglich, die Kraftstoffzufuhr zu einem ausgewählten Zylinder bis zur Menge Null zu verringern. Für Brennkraftmaschinen mit Zentraleinspritzung sind dagegen bisher nur Verfahren bekannt, die ein Verringern der Kraftstoffzufuhr für einen ausgewählten Zylinder nur in geringem Verhältnis in bezug auf diejenige Kraftstoffmenge zulassen, die den anderen Zylindern zugeführt wird. Ein Verfahren zum Verringern der Kraftstoffzufuhr für einen ausgewählten Zylinder einer mehrzylindrigen Brennkraftmaschine mit Zentraleinspritzung ist aus DE 29 29 516 C2 bekannt. Es läßt sich der Betrieb des Kraftstoffeinspritzventils nach Beginn und Länge individuell für jeden einzelnen Zylinder bestimmen. Die Werte werden so gewählt, daß ein optimaler Betrieb der Brennkraftmaschine erzielt wird. Mit dem bekannten Verfahren ist es nicht möglich, die Kraftstoffmenge für einen einzelnen Zylinder so auf einen so geringen Wert zu verringern, wie er erforderlich ist, wenn der Zylinder ausgefallen ist. Dementsprechend wird beim bekannten Verfahren auch gar nicht untersucht, ob ein Zylinder ausgefallen ist.

Das starke Verringern der Kraftstoffzufuhr zu einem ausgefallenen Zylinder ist erforderlich, da es bei den seit längerer Zeit in großem Umfang produzierten Kraftfahrzeugen mit Katalysator gefährlich ist, unverbrannten Kraftstoff in den Katalysator zu senden. Kraftstoff wird dort nämlich nachverbrannt, was bei zu großer Kraftstoffmenge zu einer Überhitzung des Katalysators und damit zu der Gefahr eines Brandes für das gesamte Fahrzeug führt.

Es besteht daher seit längerem der Wunsch, auch für Brennkraftmaschinen mit Zentraleinspritzung ein Verfahren zu finden, das es ermöglicht, einem ausgefallenen Zylinder nur extrem wenig Kraftstoff zuzuführen, wobei die Brennkraftmaschine aber noch lauffähig bleibt, so daß das Fahrzeug mit der defekten Brennkraftmaschine nicht liegen bleibt. Bisher mußte bei Fahrzeugen mit Katalysator die Brennkraftmaschine abgeschaltet werden, wenn ein Zylinder ausfiel, um durch dieses Abschalten eine Katalysatorüberhitzung zu verhindern.

Darstellung der Erfindung

Das erfindungsgemäße Verfahren geht so vor, daß es bereits demjenigen Zylinder, der in der Ansaugtaktfolge vor dem ausgefallenen Zylinder liegt, weniger Kraftstoff zuführt, als dies der Fall ist, wenn alle Zylinder funktionsfähig sind. Der Ausfall eines Zylinders wird dabei nach einem beliebigen herkömmlichen Teilverfahren festgestellt. Mit diesem Verfahren ist es auch bei Zentraleinspritzung möglich, die Kraftstoffzufuhr zum ausgefallenen Zylinder so weit zu verringern, daß es zu keiner Katalysatorüberhitzung durch zunächst unverbrannten Kraftstoff kommen kann.

Gute Versuchsergebnisse wurden bisher bei einem Vierzylindermotor dadurch erzielt, daß nur noch zwei statt vier Einspritzungen während vier Ansaugtakten vorgenommen wurden. Es scheint allgemein vorteilhaft zu sein, nicht nur die Einspritzung für den Ansaugtakt des ausgefallenen Zylinders, sondern auch für den im Ansaugtakt davor liegenden Zylinder ausfallen zu lassen. Um den genannten davor liegenden Zylinder dennoch ausreichend mit Kraftstoff zu versorgen, ist es dann vorteilhaft, die verbleibenden Einspritzzeiträume nach später zu verschieben, und zwar um so mehr, je dichter sie vor dem Ansaugtakt für den ausgefallenen Zylinder liegen.

Zeichnung

Fig. 1a - d zeitsynchronisierte Diagramme zum Erläutern der Folge von Zündsignalen (a), der Einspritzimpulse im normalen Betrieb (b), der Einspritzimpulse zur Abmagerung des ersten Zylinders eines Vierzylinder-Viertaktmotors (c) bzw. die Ansaugtaktfolge (d);
Fig. 2 ein Diagramm zum Erläutern des für einzelne Zylinder erhaltenen Lambdawertes abhängig von der Verschiebung der drei Einspritzimpulse über dem Kurbelwinkel.
Fig. 3 ein Diagramm entsprechend dem von Fig. 2, jedoch für ein Verfahren mit zwei Einspritzimpulsen; und
Fig. 4 ein Diagramm betreffend die Lambdawerte für verschiedene Zylinder abhängig von der Drehzahl, bei Ausführung des Verfahrens gemäß Fig. 1c und d.

Beschreibung von Ausführungsbeispielen

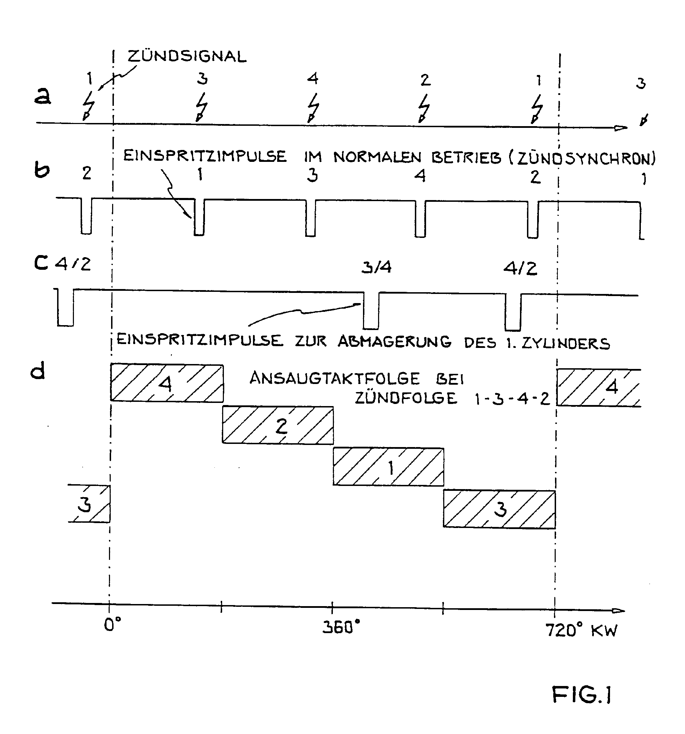

In Fig. 1 ist eine Folge von Zündsignalen für einen Vierzylinder-Viertakt-Motor dargestellt. Alle 180° Kurbelwinkel er folgt ein Zündimpuls. Die Reihenfolge ist 1, 3, 4, 2 mit dem Zündimpuls für den Zylinder 1 bei etwa - 40° KW, also etwa 40° vor dem oberen Totpunkt. Bei den meisten Brennkraftmaschinen mit Zentraleinspritzung werden die Einspritzimpulse zündsynchron, also synchron zum Zündsignal abgegeben. Die Dauer jeder Einspritzung hängt insbesondere von Last und Drehzahl ab.

In Fig. 1d sind die Ansaugtakte für die genannte Brennkraftmaschine dargestellt. Wie ersichtlich, beginnt der Ansaugtakt für den Zylinder 1 bei 360° KW. Diesem Ansaugtakt ist der oben erwähnte Einspritzimpuls zugeordnet, der bei 140° KW liegt. Der Versatz rührt von der Totzeit des Systems her und ist last- und drehzahlabhängig. Bei jedem Ansaugtakt wird also im wesentlichen diejenige Kraftstoffmenge angesaugt, die um den Versatz vorher eingespritzt wurde, wobei hier nur auf den Beginn des Einspritzimpulses abgehoben ist.

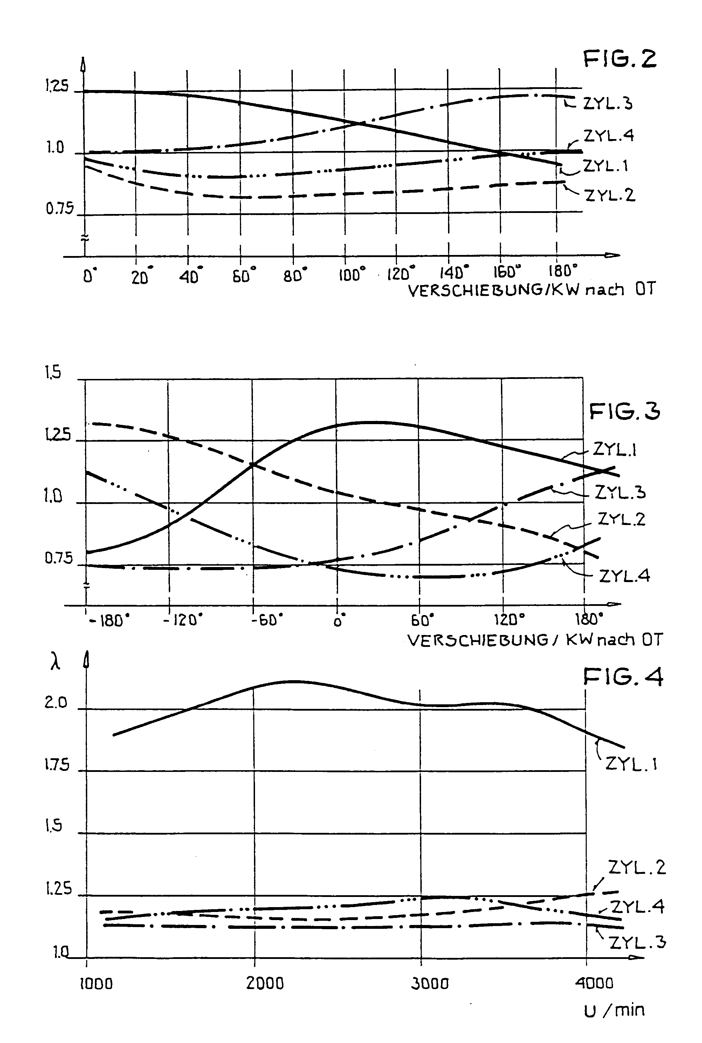

Es sei nun angenommen, Zylinder 1 sei ausgefallen und soll daher so wenig wie möglich Kraftstoff erhalten. Man wird in diesem Fall daran denken, den Einspritzimpuls für den Ansaugtakt des Zylinders 1 ausfallen zu lassen; es ist dies der mit Nr. 1 gekennzeichnete Einspritzimpuls in Fig. 1b. Es hat sich jedoch gezeigt, daß diese Maßnahme unzureichend ist. Dies wird im folgenden anhand von Fig. 2 veranschaulicht.

Fig. 2 stellt Lambdawerte für einen Fall dar, bei dem der in Fig. 1b mit "1" bezeichnete Einspritzimpuls weggelassen ist. Es wird auch gezeigt, wie sich die Gemischverteilung auf die einzelnen Zylinder verändert, wenn die verbleibenden Einspritzimpulse um einen zunehmend größeren Kurbelwinkel nach später verschoben werden. Wie ersichtlich, läßt sich ohne Verschiebung der Einspritzimpulse ein relativ magerer Wert für den Zylinder 1 einstellen. Die Lambdawerte für die anderen Zylinder liegen dann dicht beim Lambdawert Eins oder im Fetten. Für den Zylinder ist jedoch nur ein Lambdawert von etwa 1,25 erzielbar, was bedeutet, daß noch zuviel Kraftstoff vorhanden ist, als daß eine Katalysatorüberhitzung mit Sicherheit vermeidbar wäre.

Mit zunehmender Verschiebung der Einspritzimpulse nach später wird das Gemisch in Zylinder 1 fetter. Nach einer Verschiebung um ca. 180° KW ergibt sich, wie zu erwarten, die höchste Abmagerung des Gemischs für Zylinder 3.

Wird nun nicht nur der mit "1" numerierte Einspritzimpuls gemäß Fig. 1b weggelassen, sondern zusätzlich auch der mit "2" numerierte, und werden die anderen Einspritzimpulse gegenüber ihrer bei normalem Betrieb üblichen Lage um Winkel hin- und -hergeschoben, wie sie in Fig. 3 auf der Abszisse eingezeichnet sind, ergeben sich für die Lambdawerte in den vier Zylindern die in Fig. 3 eingezeichneten Verläufe. Es ist erkennbar, daß bei einer leichten Verschiebung nach später für Zylinder 1 ein Lambdawert von etwa 1,4 erzielbar ist, daß dabei der Lambdawert für Zylinder 2 ebenfalls im Mageren liegt, die Lambdawerte für die anderen beiden Zylinder aber im Fetten.

Eine wesentlich höhere Abmagerung des Gemisches in Zylinder 1 wird mit einer Lage der Einspritzimpulse erzielt, wie sie in Fig. 1c eingezeichnet sind. Gemäß Fig. 1c sind statt vier Einspritzimpulsen jeweils nur zwei vorhanden, und diese sind in ihrer Lage unterschiedlich verschoben. Der in Fig. 1b mit "3" bezeichnete Einspritzimpuls ist von + 320° KW nach + 400° KW verschoben, also um 80° in Richtung später, während der in Fig. 1b mit "4" bezeichnete Impuls von etwa 500° KW nach + 660° KW, also um 160° verschoben ist. Diese beiden Impulse sind nicht mehr den Zylindern 3 und 4 zuzuordnen, sondern der Impuls bei 400° KW liefert hauptsächlich Kraftstoff für die Zylinder 3 und 4, während derjenige bei 660° KW hauptsächlich Kraftstoff für die Zylinder 4 und 2 liefert. Diese beiden Impulse enthalten 75 % der Kraftstoffmenge, die im normalen Betrieb bei vier Impulsen abgespritzt wird. Fig. 4 stellt den zugehörigen Lambdaverlauf über der Drehzahl dar, die Verschiebung der Einspritzimpulse von 80° KW bzw. 160° KW gemäß Fig. 1c gilt jedoch nur für die Drehzahl 2000 $min^{-1}$. Bei niedereren Drehzahlen wurde eine geringere Verschiebung, bei höheren Drehzahlen eine größere Verschiebung der beiden Einspritzimpulse gewählt.

Mit dieser Lage der Einspritzimpulse und der dabei abgespritzten Menge ergibt sich ein Lambdawertverlauf über der Drehzahl, der für Zylinder 1 über alle Drehzahlen ein sehr mageres Gemisch bedeutet, während die Lambdawerte für die drei anderen Zylinder leicht mager sind. Die Brennkraftmaschine ist bei diesen Werten noch gut betreibbar, und gleichzeitig kann eine Katalysatorüberhitzung wegen unverbranntem Kraftstoff aus Zylinder 1 verhindert werden. Der Lambdawert für Zylinder 1 schwankt um 2, zeigt also sehr magere Werte an.

Es hat sich herausgestellt, daß noch kraftstoffärmere Werte für das Gemisch in Zylinder 1 und noch gleichmäßigere Lambdawerte für die übrigen Zylinder erzielt werden können, wenn die Kraftstoffmengen der beiden Einspritzimpulse unterschiedlich gewählt werden oder wenn kurze Zwischenspritzer eingespritzt werden. Die insgesamt optimalen Maßnahmen hängen von der jeweils vorliegenden Brennkraftmaschine ab. Wichtig ist aber in allen Fällen, daß bereits demjenigen Zylinder, der in der Ansaugtaktfolge vor dem ausgefallenen Zylinder liegt, weniger Kraftstoff zugeführt wird, als dies der Fall ist, wenn alle Zylinder funktionsfähig sind.

Das für einen Vierzylinder-Viertakt-Motor beschriebene Ausführungsbeispiel ist entsprechend auf Brennkraftmaschinen mit einer anderen Zylinderzahl übertragbar. Auch hier soll der in der Ansaugtaktfolge vor dem ausgefallenen Zylinder liegende Zylinder weniger Kraftstoff als im Normalfall erhalten. In allen Fällen scheint es von Vorteil zu sein, nicht nur die Einspritzung für den Ansaugtakt des ausgefallenen Zylinders ausfallen zu lassen, sondern auch diejenige für den davor liegenden Ansaugtakt. Bei einem Sechszylindermotor werden also z. B. nur noch vier Einspritzimpulse über 720° KW abgesetzt. Damit durch den Ausfall der zwei Einspritzimpulse keine zu große zeitliche Lücke in der Kraftstoffzufuhr entsteht, ist es von Vorteil, die noch verbleibenden Einspritzimpulse nach später zu verschieben, und zwar um so mehr, je dichter sie vor dem Beginn des Ansaugtakts für den ausgefallenen Zylinder liegen. Die Gesamtmenge des über die verbleibenden Einspritzimpulse eingespritzten Kraftstoffs entspricht zweckmäßigerweise in etwa derjenigen Menge, die im Normalbetrieb erhalten wird, wenn von der Gesamtmenge für alle Zylinder bei ordnungsgemäßem Arbeiten die Kraftstoffmenge für einen einzigen Zylinder bei ordnungsgemäß arbeitender Brennkraftmaschine abgezogen wird. Bei einem Sechszylindermotor werden somit in vier Impulsen etwa 84 % der Menge abgespritzt, die sonst in sechs Impulsen abgespritzt werden würde.

Anstatt zwei Einspritzimpulse ganz ausfallen zu lassen und die anderen in der Lage zu verschieben, kann man auch nur einen Einspritzimpuls ganz ausfallen lassen und einen anderen nur mit einer Teilmenge versehen. Die verbleibenden werden dann in ihrer Lage weniger verschoben, als dies der Fall ist, wenn man zwei Impulse ganz ausfallen läßt. Ein Verschieben der verbleibenden Impulse erscheint grundsätzlich empfehlenswert, jedoch ist nicht ausgeschlossen, daß es bei besonderen Motortypen auch möglich ist, nur Einspritzimpulse ausfallen zu lassen, die Menge in den verbleibenden Impulsen anzupassen, aber die Lagen des Normalbetriebs beizubehalten.

Es lassen sich somit die Anzahl der Einspritzimpulse, die Menge an Kraftstoff in jedem Impuls und die Lage der Impulse variieren. Wichtig ist aber immer, daß bereits demjenigen Zylinder, der in der Ansaugtaktfolge vor dem ausgefallenen Zylinder liegt, weniger Kraftstoff zugeführt wird, als dies der Fall ist, wenn alle Zylinder funktionsfähig sind. Man wird sich bemühen, die anderen Zylinder mit einem Lambdawert von etwa 1 zu betreiben.

Es ist offensichtlich, daß die in jedem Einspritzimpuls abzuspritzende Kraftstoffmenge von Drehzahl und Last abhängt. Es hat sich jedoch herausgestellt, daß auch die Lagen der Einspritzimpulse zweckmäßigerweise abhängig von Drehzahl und Last oder weiteren Motorparametern abhängig gemacht werden, um optimale Ergebnisse in bezug auf ein möglichst mageres Gemisch für den ausgefallenen Zylinder und Gemische nahe dem Lambdawert 1 für die verbliebenen Zylinder zu erzielen. Weiterhin können die Zündzeitpunkte variiert werden, um zu einem sicheren Zünden der nicht ausgefallenen Zylinder auch bei mageren Gemischen zu gelangen.

Wird das erfindungsgemäße Verfahren bei einem Fahrzeug mit Tankentlüftung angewandt, ist es vorteilhaft, die Tankentlüftung mit Ausfall eines Zylinders ganz abzuschalten, damit nicht von dort Kraftstoff in den ausgefallenen Zylinder gelangt, der dann zu einer Katalysatorüberhitzung führen könnte.

**Patentansprüche**

1. Verfahren zum Verringern der Kraftstoffzufuhr für einen Zylinder einer mehrzylindrigen Brennkraftmaschine, bei dem
   - untersucht wird, ob in einem der Zylinder ein Zustand eintritt, der zuverlässiges Verbrennen eines Luft/Kraftstoff-Gemisches verhindert, und
   - dann, wenn ein solcher Zustand in einem Zylinder eintritt, die Zufuhr von Kraftstoff für diesen ausgefallenen Zylinder so weit wie möglich verringert wird,
   **dadurch gekennzeichnet,** daß
   - Zentraleinspritzung verwendet wird und bereits demjenigen Zylinder, der in der Ansaugtaktfolge vor dem ausgefallenen Zylinder liegt, weniger Kraftstoff zugeführt wird, als dies der Fall ist, wenn alle Zylinder funktionsfähig sind.

2. Verfahren nach Anspruch 1, **dadurch gekennzeichnet,** daß auf zwei Kurbelwellenumdrehungen jeweils mindestens eine Einspritzung weniger ausgeführt wird, als Ansaugtakte vorhanden sind, und daß auf die verbleibenden Einspritzungen im wesentlichen diejenige Kraftstoffmenge verteilt wird, die derjenigen Menge entspricht, die erhalten wird, wenn von der Gesamtmenge für alle Zylinder bei ordnungsgemäß arbeitender Brennkraftmaschine die Kraftstoffmenge für einen einzigen Zylinder bei ordnungsgemäß arbeitender Brennkraftmaschine abgezogen wird.

3. Verfahren nach einem der Ansprüche 1 oder 2, **dadurch gekennzeichnet,** daß die Einspritzung für den Ansaugtakt des ausgefallenen Zylinders unterbleibt und die Ein-spritzmenge für den Ansaugtakt des in der Ansaugtaktfolge davor liegenden Zylinders gegenüber derjenigen Menge verringert wird, wie sie bei ansonsten gleichen Betriebsbedingungen im Falle funktionsfähiger Zylinder eingespritzt würde.

4. Verfahren nach Anspruch 3, **dadurch gekennzeichnet,** daß die genannte verringerte Einspritzmenge auf den Wert Null gesetzt wird.

**5.** Verfahren nach Anspruch 4, **dadurch gekennzeichnet**, daß die Einspritzzeiträume für die Ansaugtakte vor dem Ansaugtakt für den ausgefallenen Zylinder gegenüber denjenigen Einspritzzeiträumen nach später verschoben werden, die für funktionsfähige Zylinder gelten, und zwar um so mehr, je dichter ein Einspritzzeitraum vor dem Beginn des Ansaugtakts für den ausgefallenen Zylinder liegt.

**6.** Verfahren nach Anspruch 5, **dadurch gekennzeichnet**, daß die Spätverschiebung der Einspritzzeiträume in Abhängigkeit von Last und Drehzahl des Motors verändert wird.

**7.** Verfahren nach einem der Ansprüche 1 - 6, **dadurch gekennzeichnet**, daß eine eventuell vorhandene, in den Saugtrakt mündende Tankentlüftung nicht mehr betrieben wird.

**Claims**

**1.** Method for reducing the fuel supply for one cylinder of a multi-cylinder internal combustion engine, in which
   - it is investigated whether a state preventing reliable combustion of an air/fuel mixture occurs in one of the cylinders, and
   - if such a state occurs in one cylinder, the supply of fuel for this failed cylinder is then reduced as far as possible, characterised in that
   - centralised injection is used and the cylinder located in front of the failed cylinder in the intake cycle sequence is already supplied with less fuel than is the case when all cylinders are operable.

**2.** Method according to Claim 1, characterised in that in two crankshaft rotations in each case at least one injection less is carried out than there are intake cycles and that essentially the quantity of fuel corresponding to the quantity which is obtained when the fuel quantity for a single cylinder with properly operating internal combustion engine is subtracted from the total quantity for all cylinders with properly operating internal combustion engine is distributed to the remaining injections.

**3.** Method according to one of Claims 1 or 2, characterised in that the injection for the intake cycle of the failed cylinder is omitted and the injection quantity for the intake cycle of the cylinder in front of it in the intake cycle sequence is reduced with respect to the quantity which would be injected with otherwise identical operating conditions in the case of operable cylinders.

**4.** Method according to Claim 3, characterised in that the said reduced injection quantity is set to the value zero.

**5.** Method according to Claim 4, characterised in that the injection periods for the intake cycles in front of the intake cycle for the failed cylinder are displaced towards later with respect to the injection periods applicable to operable cylinders, to be precise all the more so the closer an injection period is in front of the beginning of the intake cycle for the failed cylinder.

**6.** Method according to Claim 5, characterised in that the late displacement of the injection periods is changed in dependence on load and rotational speed of the engine.

**7.** Method according to one of Claims 1 - 6, characterised in that any tank venting present and opening into the intake duct is no longer operated.

**Revendications**

**1.** Procédé pour réduire l'alimentation en carburant d'un cylindre d'un moteur à combustion interne à plusieurs cylindres, procédé dans lequel :
   - il est recherché si, dans un des cylindres, se produit une situation qui empêche la combustion satisfaisante d'un mélange air/carburant,
   - ensuite, lorsqu'une telle situation se présente dans un cylindre, l'alimentation en carburant pour ce cylindre défaillant, est réduite dans toute la mesure du possible,
   procédé caractérisé en ce qu'une injection centrale est utilisée et, au cylindre qui se situe devant le cylindre défaillant dans la succession des cadences d'aspiration, il est déjà amené moins de carburant que ce n'est le cas lorsque tous les cylindres sont aptes à fonctionner.

**2.** Procédé selon la revendication 1, caractérisé en ce que sur deux révolutions de l'arbre de vilebrequin, il est effectué respectivement au moins une injection en moins qu'il n'y a de cadences d'aspiration, et en ce que sur les injections subsistantes est essentiellement répartie la quantité de carburant qui correspond à la quantité obtenue lorsque de la quantité totale pour tous les cylindres dans le cas d'un moteur à combustion interne fonctionnant correctement, on soustrait la quantité de carburant pour un cylindre unique dans le cas également d'un moteur à combustion interne fonctionnant correctement.

**3.** Procédé selon une des revendications 1 ou 2, caractérisé en ce que l'injection est supprimée pour la cadence d'aspiration du cylindre défaillant, tandis que la quantité à injecter pour la cadence d'aspiration du cylindre placé devant dans la succession des cadences d'aspiration, est réduite par rapport à la quantité qui serait injectée, par ailleurs dans les mêmes conditions de fonctionnement, dans le cas de cylindres aptes à fonctionner.

4. Procédé selon la revendication 3, caractérisé en ce que la quantité injectée réduite mentionnée, est fixée à zéro.

5. Procédé selon la revendication 4, caractérisé en ce que des espaces de temps d'injection pour les cadences d'aspiration avant la cadence d'aspiration pour le cylindre défaillant, sont décalés dans le sens du retard par rapport aux espaces de temps d'injection valables pour les cylindres aptes à fonctionner, et ceci d'autant plus qu'un espace d'injection est placé plus immédiatement avant le début de la cadence d'aspiration pour le cylindre défaillant.

6. Procédé selon la revendication 5, caractérisé en ce que le décalage dans le sens du retard des espaces de temps d'injection, est modifié en fonction de la charge et de la vitesse de rotation du moteur.

7. Procédé selon une des revendications 1 à 6, caractérisé en ce qu'un dégazage éventuellement existant du réservoir débouchant dans la cadence d'aspiration, n'est plus exploité.

**a** ZÜNDSIGNAL

1  3  4  2  1  3

**b** EINSPRITZIMPULSE IM NORMALEN BETRIEB (ZÜNDSYNCHRON)

2  1  3  4  2  1

**C** 4/2  3/4  4/2

EINSPRITZIMPULSE ZUR ABMAGERUNG DES 1. ZYLINDERS

**d**  4  ANSAUGTAKTFOLGE BEI  4
ZÜNDFOLGE 1-3-4-2
2
1
3  3

0°  360°  720° KW

FIG.1

FIG.2

ZYL.3
ZYL.4
ZYL.1
ZYL.2

VERSCHIEBUNG/KW nach OT

FIG.3

ZYL.1
ZYL.3
ZYL.2
ZYL.4

VERSCHIEBUNG / KW nach OT

λ

FIG.4

ZYL.1

ZYL.2
ZYL.4
ZYL.3

U /min